# DEMANDE DE BREVET EUROPEEN

(11) **EP 0 630 124 A1**
(43) Date de publication de la demande: **21.12.1994**
(21) Numéro de dépôt: 94401321.8
(22) Date de dépôt: 13.06.1994
(51) Int. Cl.: H04B 10/18, G02B 27/44, H01S 3/00

(54) **Procédé de dispersion chromatique temporelle, dispositif optique dispersif, et système de transmission à fibre optique utilisant ce dispositif**

(30) Priorité: 17.06.1993 FR 9307316
(71) Demandeur: ALCATEL N.V., NL-1077 XX Amsterdam (NL)
(72) Inventeur: Jurek, Marie-Paule, F-93160 Noisy le Grand (FR); Bernard, Jean-Jacques, F-91810 Vert le Grand (FR); Chesnoy, Jose, F-74014 Paris (FR)
(74) Mandataire: Bourely, Paul

(57) **Abrégé**

Un dispositif selon l'invention comporte:
- un réseau de diffraction (8) pour séparer angulairement les composantes spectrales d'un faisceau à traiter (6),
- un réseau (11) conjugué du précédent pour restituer le parallélisme de ces composantes.
- et un miroir en escalier (14) pour réfléchir ces composantes en retour vers ces mêmes réseaux (11, 8) tout en leur imposant des trajets de longueurs différentes.

L'invention s'applique notamment à la compensation de la dispersion d'une fibre de ligne (3) d'une liaison de grande longueur entre un émetteur (2) et un récepteur (21).

## Description

La présente invention vise à appliquer une dispersion à des signaux optiques. La dispersion à appliquer est chromatique en ce sens qu'elle doit être réalisée en fonction de positions spectrales de ces signaux. Elle est temporelle en ce sens qu'elle se manifeste par l'application de décalages temporels entre ces signaux.

Cette invention concerne plus précisément la réalisation de décalages temporels souhaités entre divers signaux élémentaires modulant respectivement diverses composantes spectrales d'un faisceau lumineux à traiter. Elle trouve notamment application dans le cas typique suivant : une modulation globale initiale a été appliquée à un faisceau lumineux initial pour lui faire porter une information à transmettre. Elle a fait apparaître des signaux élémentaires initiaux modulant les composantes spectrales de ce faisceau. Enfin ces signaux élémentaires ont subi des décalages temporels parasites différenciés, de tels décalages parasites résultant typiquement de la dispersion chromatique parasite propre à un milieu à travers lequel la lumière de ce faisceau initial s'est propagée pour constituer le faisceau à traiter. La présente invention vise alors à effectuer sur ce faisceau un traitement pour lui appliquer une dispersion chromatique souhaitée. Cette dernière est choisie pour compenser la dispersion chromatique parasite dans la mesure nécessaire pour permettre, à partir d'un faisceau traité, de restituer l'information qui était à transmettre.

Cette invention s'applique notamment avec avantage dans le cas plus particulier suivant, qui présente en pratique une importance considérable:

Une ligne de transmission de longueur importante supérieure à 100km, a été réalisée antérieurement à la présente invention sous la forme d'une fibre optique de ligne munie de répéteurs ou d'amplificateurs optiques intermédiaires pour transmettre des informations à débit moyen ou haut. Cette fibre déjà posée présente typiquement une dispersion chromatique très forte, voisine de 20ps/nm.km. Or, les progrès techniques donnent maintenant la possibilité de réaliser sur une fibre une transmission sans répéteur ni amplificateur optique intermédiaire à très haut débit (10 Gbit/s). Mais la très forte dispersion chromatique de la fibre de ligne déjà posée s'oppose à cette possibilité si on veut réaliser une telle transmission à très haut débit sur cette fibre.

La limitation de débit liée à cette forte dispersion peut être en partie évitée par la mise en oeuvre, à l'émission, d'une modulation externe à la source permettant de réduire l'élargissement du spectre de la source qui serait autrement consécutif à sa modulation directe par son courant d'injection (phénomène de "chirp" ou de modulation de fréquence parasite due à la modulation d'intensité).

Cependant, l'encombrement spectral du signal optique émis résulte aussi du débit d'information à transmettre. Pour des liaisons à très haut débit (10 Gbit/s), le signal émis occupe une plage spectrale correspondant aux bandes latérales de modulation, soit environ 0,2 nm. La dispersion chromatique conduit à une dispersion totale de la liaison de l'ordre de 400 ps sur 100 km, valeur incompatible avec le débit de 10 Gbit/s à transmettre.

Un dispositif de compensation de la dispersion chromatique de la fibre de ligne s'avère donc nécessaire si on veut utiliser la fibre posée.

Une telle compensation peut être réalisée, côté réception, par un premier dispositif de compensation connu constituée par une fibre optique beaucoup plus courte que la fibre de ligne mais présentant une très forte dispersion de signe opposé. La valeur optimale de la compensation dépend non seulement de la dispersion de la fibre de ligne mais aussi des effets non linéaires apparaissant dans cette fibre. Elle permet de réaliser une compensation efficace. Mais l'encombrement de la fibre de compensation est gênant si on veut disposer cette fibre sous la forme d'une bobine intégrée dans le terminal de réception.

La présente invention a notamment pour but de diminuer l'encombrement d'un dispositif de compensation de dispersion situé dans le terminal de réception d'une liaison optique de grande longueur.

Un deuxième dispositif de compensation connu comporte d'abord un système de décomposition chromatique pour séparer spatialement une pluralité de composantes spectrales du faisceau à traiter puis une pluralité de fibres optiques de longueurs diverses pour transmettre respectivement ces composantes.

Ce deuxième dispositif connu est décrit dans le document US-A-3 863 063 (G.S.Indig et al).

Le positionnement de la pluralité de fibres de ce deuxième dispositif est délicat et des pertes de couplage apparaissent aux entrées et sorties de ces fibres.

La présente invention a notamment pour but d'éviter l'emploi d'une telle pluralité de fibres optiques.

Dans un troisième dispositif optique dispersif connu un premier réseau de diffraction reçoit un faisceau parallèle à traiter et sépare angulairement les composantes spectrales de ce faisceau. Ces dernières sont reçues par un deuxième réseau de diffraction qui est dit "conjugué" du premier parce qu'il restitue le parallélisme de ces composantes tout en conservant la séparation de position qu'elles ont précédemment acquise. Un miroir de renvoi perpendiculaire au faisceau les renvoie ensuite sur ce deuxième réseau, qui les renvoie sur le premier réseau qui reconstitue un faisceau parallèle traité se propageant en sens inverse du faisceau à traiter et qui en est séparé par une lame semi réfléchissante inclinée. Les différences de longueurs des trajets des diverses composantes spectrales ont réalisé la dispersion chromatique souhaitée.

Dans ce troisième dispositif connu l'ensemble des deux réseaux constitue à la fois, à l'aller, un système de décomposition chromatique, et, au retour, un système de recomposition chromatique. C'est au sein de cet ensemble que sont réalisés les décalages temporels souhaités.

Un tel dispositif dispersif connu est décrit dans un article:
TUP4 Compensation of negative group velocity dispersion in optical fibers with a grating and telescope pulse compressor. ANATOLY FRENKEL, JONATHAN P. HERITAGE, OSCARE. MARTINEZ. - (CLEO '88/TUESDAY AFTERNOON/130-133) - publié par l'Optical Society of America - 2010 Massachusetts Avenue, NW Washington D.C. 20036-1023.

Il présente l'inconvénient que les décalages temporels qu'il permet d'appliquer sont limités et insuffisants pour la compensation de la dispersion chromatique d'une fibre de ligne typique de grande longueur.

La présente invention a notamment pour but d'augmenter les décalages temporels appliqués par un dispositif optique dispersif.

De manière plus générale elle vise à l'application de décalages temporels importants et choisis à l'aide d'un dispositif peu coûteux et peu encombrant.

Dans ces buts elle a notamment pour objet un procédé de dispersion chromatique temporelle d'un faisceau lumineux spectralement composite, constituant un faisceau mélangé à traiter, ce procédé comportant les étapes suivantes:
- décomposition chromatique dudit faisceau mélangé à traiter pour séparer spatialement plusieurs composantes spectrales de ce faisceau,
- puis réflexion de ces composantes sur plusieurs aires réflectrices constituant les marches d'un miroir de renvoi en forme d'escalier pour imposer à ces composantes des trajets présentant plusieurs longueurs optiques différentes, respectivement,
- enfin recomposition chromatique par superposition de ces composantes pour former un faisceau mélangé traité.

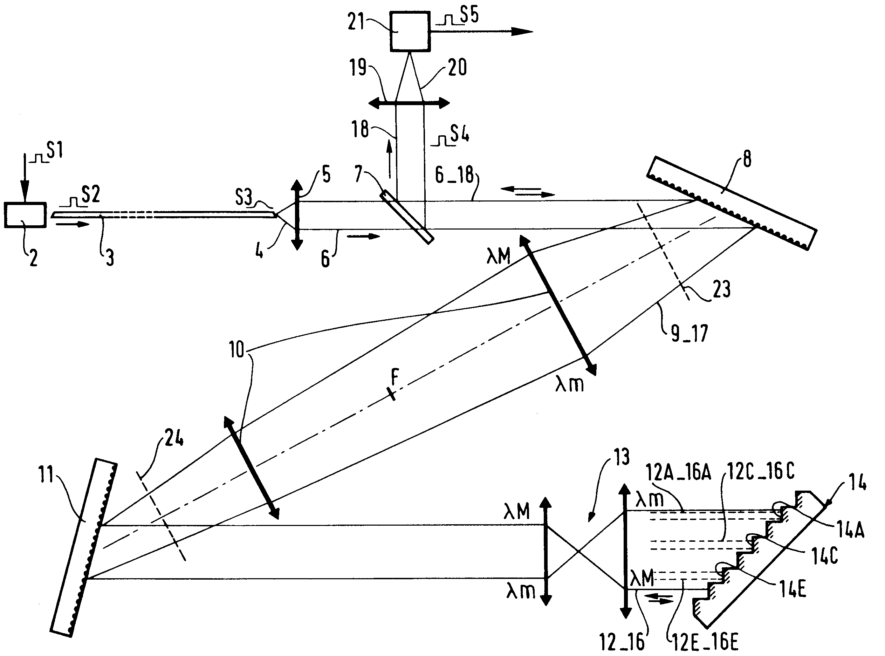

A l'aide de la figure ci-jointe on va décrire ci-après un exemple de mise en oeuvre de la présente invention. Cette figure représente un système de transmission à fibre optique réalisé selon cette invention et utilisant un dispositif optique dispersif selon cette invention.

De manière d'abord générale un tel dispositif comporte les éléments suivants:
- Un système de décomposition chromatique 8, 11 pour recevoir un faisceau lumineux constituant un faisceau mélangé à traiter 6. La lumière de ce dernier comporte plusieurs composantes spectrales modulées par plusieurs signaux élémentaires qui leur correspondent, respectivement. Ces composantes sont superposées dans ce faisceau. Ce système restitue en réponse un faisceau décomposé arrivant 12. Ce dernier se propage selon une direction longitudinale. Il est constitué de plusieurs pinceaux arrivants 12A, 12C formés par ces composantes et correspondant à ces composantes, respectivement. Ces pinceaux sont juxtaposés transversalement dans ce faisceau, et la lumière de chacun d'eux est modulée par le signal élémentaire correspondant.
- Un ensemble de décalage temporel 14 comportant plusieurs éléments de retard 14A, 14C correspondant respectivement à ces pinceaux arrivants. L'un de ces éléments constitue un élément de référence 14A. Chaque élément de retard 14C est disposé pour recevoir le pinceau arrivant correspondant 12C et pour imposer à la lumière de ce pinceau un trajet présentant une longueur optique et un temps de propagation TC correspondant à cet élément de manière à restituer un pinceau partant 16C correspondant à ce pinceau arrivant et à cet élément. La lumière de ce pinceau partant est modulée par un signal élémentaire présentant un retard égal à ce temps de propagation par rapport au signal élémentaire qui modulait la lumière de ce pinceau arrivant. Un décalage temporel DC correspondant à cet élément et à ces pinceaux arrivant et partant est constitué par l'écart TC-TA de ce temps de propagation par rapport au temps de propagation TA correspondant à l'élément de référence. L'ensemble des pinceaux partants 16A, 16C constitue un faiseau décomposé partant 16 au sein duquel ces pinceaux sont juxtaposés transversalement.
- Enfin un système de recomposition chromatique 11, 8 pour recevoir ce faisceau décomposé partant et pour restituer un faisceau mélangé traité 18 dans lequel lesdites composantes sont à nouveau superposées.
- Un miroir de renvoi est disposé comme connu pour recevoir le faisceau décomposé arrivant 12 et pour en réfléchir la lumière en constituant le faisceau décomposé partant.Dans ce dernier les pinceaux sont encore juxtaposés transversalement.
   Selon la présente invention ce miroir de renvoi 14 est un miroir en forme d'escalier constitué de plusieurs aires réflectrices 14A, 14C constituant respectivement lesdits éléments de retard. Chaque aire réflectrice 14C est disposée pour réfléchir le pinceau arrivant 12C correspondant à cette aire en formant le pinceau partant correspondant également à cette aire. Ces aires réflectrices présentent des décalages mutuels selon la direction longitudinale pour que ce miroir de renvoi constitue ledit ensemble de décalage temporel. Elles sont planes et mutuellement parallèles pour que ce miroir reçoive le faisceau décomposé arrivant 12 sous la forme d'un faisceau parallèle et restitue le faisceau décomposé partant 16 sous la forme d'un faisceau parallèle. Chacune d'elles est perpendiculaire au pinceau arrivant 12C correspondant à cette aire pour mettre le pinceau partant 16C correspondant à cette aire en coïncidence de trajet avec ce pinceau arrivant. Le système de décomposition chromatique 8, 11 constitue alors en même temps comme représenté le système de recomposition chromatique.

Chacun des systèmes de décomposition et de recomposition chromatique comporte les éléments suivants:
- Un réseau périphérique 8 constitué par un réseau de diffraction et apte à réaliser un couplage entre d'une part un faisceau mélangé 6, 18 présentant la forme d'un faisceau parallèle et d'autre part un faisceau intermédiaire 9, 17 dans lequel les directions de propagation des composantes spectrales sont réparties angulairement. Des aires traversées respectivement par ces composantes sont sensiblement confondues dans des sections 23 de ce faisceau intermédiaire voisines de ce réseau périphérique, et elles sont sensiblement séparées dans des sections 24 de ce faisceau intermédiaire situées à une distance au moins égale à une distance de séparation à partir de ce réseau périphérique.
- Et un réseau central 11 constitué par un réseau de diffraction et situé à une distance du réseau périphérique au moins égale à la distance de séparation. Ce réseau central est conjugué de ce réseau périphérique pour réaliser un couplage entre d'une part un faisceau intermédiaire 9, 17 et d'autre part un faisceau décomposé 12, 16 présentant la forme d'un faisceau parallèle. Dans ce cas et comme représenté l'ensemble de décalage temporel présente à ce faisceau des surfaces optiques planes 14A, 14C.

Chaque composante spectrale comporte typiquement des sous-composantes ayant diverses longueurs d'onde dans une plage spectrale de cette composante, les plages spectrales de ces composantes spectrales étant mutuellement séparées et se succédant au sein d'une plage spectrale du dispositif. Dans ce cas, de préférence, les réseaux périphérique 8 et central 11 de chacun des systèmes de décomposition et de recomposition chromatiques sont disposés pour imposer aux diverses sous-composantes de chaque composante des différences de longueurs de trajet entraînant des décalages temporels supplémentaires limités, ces derniers étant tels qu'un décalage temporel total imposé à une sous-composante par l'ensemble du dispositif varie continument en fonction de la longueur d'onde de cette sous-composante dans les limites de la plage spectrale de ce dispositif.

La présente invention a également pour objet un système de transmission à fibre optique comportant les éléments suivants:
- Un émetteur 2 fournit des signaux optiques d'entrée S2 porteurs d'une information à transmettre S1.
- Une ligne à fibre optique 3 reçoit ces signaux optiques d'entrée et les guide pour restituer à distance des signaux optiques intermédiaires S3. Ces derniers signaux sont affectés par une dispersion chromatique parasite de cette ligne.
- Un dispositif optique dispersif tel que précédemment décrit reçoit ces signaux optiques intermédiaires. Il impose aux composantes spectrales et/ou sous-composantes des décalages temporels compensant la dispersion chromatique parasite de manière à fournir des signaux optiques corrigés S4.
- Enfin un récepteur 21 reçoit ces signaux optiques corrigés et restitue en réponse l'information qui était à transmettre.

## Revendications

**1/** Procédé de dispersion chromatique temporelle d'un faisceau lumineux spectralement composite, constituant un faisceau mélangé à traiter, ce procédé comportant les étapes suivantes:
- décomposition chromatique dudit faisceau mélangé à traiter (6) pour séparer spatialement plusieurs composantes spectrales (12A, 12C) de ce faisceau,
- puis réflexion de ces composantes sur plusieurs aires réflectrices (14A, 14C) constituant les marches d'un miroir de renvoi (14) en forme d'escalier pour imposer à ces composantes des trajets présentant plusieurs longueurs optiques différentes, respectivement,
- enfin recomposition chromatique par superposition de ces composantes pour former un faisceau mélangé traité (18).

**2/** Dispositif optique dispersif comportant:
- un système de décomposition chromatique (8, 11) pour recevoir un faisceau lumineux, ce faisceau constituant un faisceau mélangé à traiter (6) et étant constitué d'une lumière comportant plusieurs composantes spectrales modulées par plusieurs signaux élémentaires correspondant à ces composantes, respectivement, ces composantes étant superposées dans ce faisceau, ce système étant apte à restituer en réponse un faisceau décomposé arrivant (12) se propageant selon une direction longitudinale de ce faisceau, ce faisceau décomposé étant constitué de plusieurs pinceaux arrivants (12A, 12C) formés par ces composantes et correspondant à ces composantes, respectivement, ces pinceaux étant juxtaposés transversalement dans ce faisceau, la lumière de chacun de ces pinceaux étant modulée par ledit signal élémentaire correspondant,
- un miroir de renvoi (14) en forme d'escalier avec des marches constituées par plusieurs aires réflectrices (14A, 14C) mutuellement décalées selon la direction longitudinale et correspondant respectivement à ces pinceaux arrivants, l'une de ces aires constituant une aire de référence (14A), chaque aire réflectrice (14C) étant disposée pour recevoir et réfléchir le pinceau arrivant correspondant (12C) tout en imposant à la lumière de ce pinceau un trajet présentant une longueur optique et un temps de propagation (TC) correspondant à cette aire de manière à restituer un pinceau partant (16C) correspondant à ce pinceau arrivant et à cette aire, la lumière de ce pinceau partant étant modulée par un signal élémentaire présentant un retard égal à ce temps de propagation par rapport au signal élémentaire qui modulait la lumière de ce pinceau arrivant, un décalage temporel (DC) correspondant à cette aire et à ces pinceaux arrivant et partant étant constitué par l'écart (TC-TA) de ce temps de propagation par rapport au temps de propagation (TA) correspondant à l'aire de référence, l'ensemble des pinceaux partants (16A, 16C) constituant un faiseau décomposé partant (16) au sein duquel ces pinceaux sont juxtaposés transversalement,
- et un système de recomposition chromatique (11, 8) pour recevoir ce faisceau décomposé partant et pour restituer un faisceau mélangé traité (18) dans lequel lesdites composantes sont à nouveau superposées.

**3/** Dispositif selon la revendication 2 dans lequel lesdites aires réflectrices (14A, 14C) du miroir de renvoi (14) sont planes et mutuellement parallèles pour que ce miroir reçoive ledit faisceau décomposé arrivant (12) sous la forme d'un faisceau parallèle et restitue ledit faisceau décomposé partant (16) sous la forme d'un faisceau parallèle.

**4/** Dispositif selon la revendication 2 dans lequel chaque dite aire réflectrice (14C) du miroir de renvoi (14) est perpendiculaire audit pinceau arrivant (12C) correspondant à cette aire pour mettre ledit pinceau partant (16C) correspondant à cette aire en coïncidence de trajet avec ce pinceau arrivant, ledit système de décomposition chromatique (8, 11) constituant en même temps ledit système de recomposition chromatique.

**5/** Dispositif selon la revendication 2 dans lequel chacun desdits systèmes de décomposition et de recomposition chromatique comporte:
- un réseau périphérique (8) constitué par un réseau de diffraction et apte à réaliser un couplage entre d'une part un dit faisceau mélangé (6, 18) présentant la forme d'un faisceau parallèle et d'autre part un faisceau intermédiaire (9, 17) dans lequel les directions de propagation desdites composantes spectrales sont réparties angulairement, des aires traversées respectivement par ces composantes étant sensiblement confondues dans des sections (23) de ce faisceau intermédiaire voisines de ce réseau périphérique, et étant sensiblement séparées dans des sections (24) de ce faisceau intermédiaire situées à une distance au moins égale à une distance de séparation à partir de ce réseau périphérique,
- et un réseau central (11) constitué par un réseau de diffraction et situé à une distance dudit réseau périphérique au moins égale à ladite distance de séparation, ce réseau central étant conjugué de ce réseau périphérique pour réaliser un couplage entre d'une part un dit faisceau intermédiaire (9, 17) et d'autre part un dit faisceau décomposé (12, 16) présentant la forme d'un faisceau parallèle, ledit ensemble de décalage temporel présentant à ce faisceau des surfaces optiques planes (14A, 14C).

**6/** Dispositif selon la revendication 5 dans lequel chaque dite composante spectrale comporte des sous-composantes ayant diverses longueurs d'onde dans une plage spectrale de cette composante, les plages spectrales de ces composantes spectrales étant mutuellement séparées et se succédant au sein d'une plage spectrale de ce dispositif,
ce dispositif étant caractérisé par le fait que lesdits réseaux périphérique (8) et central (11) de chacun desdits systèmes de décomposition et de recomposition chromatiques sont disposés pour imposer aux diverses sous-composantes de chaque dite composante des différences de longueurs de trajet entraînant des décalages temporels supplémentaires limités tels qu'un décalage temporel total imposé à une sous-composante par ce dispositif varie continument en fonction de la longueur d'onde de cette sous-composante dans les limites de la plage spectrale de ce dispositif.

**7/** Système de transmission à fibre optique comportant
- un émetteur (2) pour fournir des signaux optiques d'entrée (S2) porteurs d'une information à transmettre (S1),
- une ligne à fibre optique (3) recevant ces signaux optiques d'entrée et les guidant pour restituer à distance des signaux optiques intermédiaires (S3), ces derniers signaux étant affectés par une dispersion chromatique parasite de cette ligne,
- un dispositif selon l'une quelconque des revendications 2 à 6 pour recevoir ces signaux optiques intermédiaires et pour imposer auxdites composantes spectrales et/ou sous-composantes des décalages temporels compensant ladite dispersion chromatique parasite de manière à fournir des signaux optiques corrigés (S4),
- et un récepteur (21) pour recevoir ces signaux optiques corrigés et pour restituer en réponse ladite information qui était à transmettre.
